# EUROPÄISCHE PATENTSCHRIFT

(11) **EP 4 313 683 B1**
(45) Veröffentlichungstag und Bekanntmachung des Hinweises auf die Patenterteilung: **23.07.2025**
(21) Anmeldenummer: 22717717.7
(22) Anmeldetag: 23.03.2022
(51) Int. Cl.: B60Q 1/28, B60Q 1/26, F21S 43/237, F21S 43/241, F21S 43/245, F21S 43/249, F21S 43/251, B60R 19/52, F21S 43/14, F21S 43/27, F21S 43/50

(54) **BAUGRUPPE DES LEUCHTENDEN KÜHLERGRILLS**
ILLUMINATED RADIATOR GRILL ASSEMBLY
ENSEMBLE CALANDRE ÉCLAIRÉ

(30) Priorität: 26.03.2021 CZ 20210154
(43) Veröffentlichungstag der Anmeldung: 07.02.2024
(73) Patentinhaber: Skoda Auto A.S., 293 01 Mladá Boleslav II (CZ)
(72) Erfinder: KRATOCHVÍL, Vratislav, 29431 Písková Lhota 174 (CZ); KNEBL, Pavel, 29301 Mladá Boleslav (CZ)
(86) Internationale Anmeldenummer: PCT/CZ2022/000018
(87) Internationale Veröffentlichungsnummer: WO 2022/199729

(56) Entgegenhaltungen:
- EP-A1- 3 190 333
- EP-A1- 3 529 107
- CN-U- 210 310 255
- CN-U- 210 485 572
- CN-Y- 2 933 979
- DE-A1- 10 340 723
- DE-U1- 202020 104 697
- JP-A- 2021 009 791

## Beschreibung

### Technisches Gebiet

Die vorliegende Erfindung betrifft einen Kühlergrill, der Beleuchtungselemente aufweist, konkret einen Kühlergrill mit lichtundurchlässigen Rippen, zwischen denen lichtleitende Vorsprünge für die Ausstrahlung des Lichts von der hinter dem Kühlergrill angeordneten Lichtquelle ausgeführt sind.

### Bisheriger Stand der Technik

Der Fahrzeugkühlergrill dient in erster Linie dazu, die Luftdurchlässe zum Motor, Fahrzeugkühler und/oder in den Innenraum durch die Klimaanlage abzugrenzen. Standardmäßig handelt es sich um ein in der Montageöffnung im Fahrzeugfrontbereich befestigtes Kunststoffteil, wobei dieses Kunststoffteil eine Reihe von Luftdurchgangsöffnung aufweist. In den letzten Jahren wurde der Kühlergrill oft durch eine Beleuchtungsbaugruppe ergänzt oder ersetzt; ein solcher leuchtender Kühlergrill beleuchtet dann den Bereich vor dem Fahrzeug und erhöht die Sichtbarkeit des Fahrzeugs, so dass er beispielsweise als Tagfahrlicht oder in einem Nachtmodus als Bestandteil des Stand-/Abblendlichts dienen kann. Darüber hinaus ist der leuchtende Kühlergrill ein sehr markantes Designelement des Fahrzeuges, da er eine relativ große Fläche im Fahrzeugfrontbereich abdeckt, der am meisten sichtbar ist. Die Ausgestaltung des leuchtenden Kühlergrills kann dann beispielsweise die Fahrzeuge einer bestimmten Marke deutlich von anderen Fahrzeugen differenzieren. Leuchtende Kühlergrills können weiterhin zur Luftzufuhr verwendet werden, oder sie können die Montageöffnung für den Kühlergrill vollständig abschließen und die Luft kann dann beispielsweise durch anderes Gitter im Stoßfänger zugeführt werden.

Ein Beispiel eines beleuchteten Kühlergrills ist beispielsweise aus dem Dokument CZ201800475 bekannt. Die beschriebene Lösung umfasst eine Lichtquelle, einen Lichtleiter, einen Rahmen und eine durchsichtige Frontabdeckung, die zusammen eine geschlossene Baugruppe bilden, wobei die spezifische Form dieser Komponenten das endgültige Erscheinungsbild des Kühlergrills und des emittierten Lichtes prägt. Diese Lösung erfordert jedoch den Austausch eines standardmäßig undurchsichtigen Kühlergrills und blockiert die Luftzufuhr, was für einige Fahrzeugtypen nicht geeignet sein muss. Darüber hinaus haben die vollständig aus einem lichtdurchlässigen Material erzeugten Kühlergrills eine geringere Beständigkeit gegen Schmutz, Kratzer oder Aufprall als herkömmliche lichtundurchlässige Kühlergrills.

Ein weiterer leuchtender Kühlergrill ist aus dem Dokument EP3741619 bekannt. Die Lösung aus diesem Dokument umfasst einen Kühlergrill, der eine Reihe von horizontalen Wellrippen aufweist, die aus einem durchsichtigen Material, einem Lichtleiter und einem undurchsichtigen Rahmen gebildet werden, wobei das durchsichtige Material als Linse für die Lichtausstrahlung vom Lichtleiter dient. Aber auch diese Lösung erfordert, dass der ursprüngliche Kühlergrill mit undurchsichtigen Rippen durch einen völlig neuen Kühlergrill teilweise aus durchsichtigem Material ersetzt wird.

Aus der CN 210 310 255 U ist ebenfalls ein Kühlergrill für ein Fahrzeug mit Durchgangsöffnungen bekannt. Auf einer dem Motorraum des Fahrzeugs zugewandten Rückseite des Kühlergrills ist eine Beleuchtungsgruppe mit einer Vielzahl an LED-Lampen bereitgestellt. Zwischen der Beleuchtungsgruppe und dem Kühlergrill ist eine lichtleitende Platte angeordnet, die silberbeschichtete Vorsprünge aufweist. Die Vorsprünge können durch die Durchgangsöffnungen durchgesteckt werden und so Licht von den LED-Lampen nach vorne vor das Fahrzeug abstrahlen. Durch die Silberbeschichtung wird erreicht, dass das Licht gleichmäßig nach vorne abgestrahlt wird und keine Lichtstreuung an den Seitenwänden der Vorsprünge stattfindet. Ein weiterer leuchtender Kühlergrill ist aus dem Dokument DE 20 2020 104697 U1 bekannt.

Bekannte Lösungen von leuchtenden Kühlergrills, welche den ursprünglichen Kühlergrill aus lichtundurchlässigem Material ergänzt um Lichtquellen, in der Regel LED-Quellen, umfassen, strahlen dann das Licht hauptsächlich indirekt, indem sie das Gitter oder die Rippen auf dem Kühlergrill beleuchten, d.h. die Lichtquelle beleuchtet einen lichtundurchlässigen Teil und von ihm wird das Licht vor das Fahrzeug reflektiert. Diese Lösungen haben jedoch nur begrenzte Möglichkeiten in Bezug auf die Modifikation des Erscheinungsbildes des leuchtenden Kühlergrills und in Bezug auf die Intensität und Homogenisierung des ausgestrahlten Lichts.

Ein weiterer leuchtender Kühlergrill ist aus dem Dokument WO200518987 bekannt. Dieses Dokument beschreibt einen Kühlergrill mit lichtundurchlässigen Rippen, wobei dieser Kühlergrill von hinten mit einem Lichtleiter mit Punktlichtquellen an den Enden hinterleuchtet wird. Das Licht aus dem Lichtleiter beleuchtet also die Rippen, die das Licht vor das Fahrzeug reflektieren. In einer Ausführung dieser Lösung ist der Lichtleiter so angeordnet, dass er durch die Luftdurchgangsöffnungen im Kühlergrill sichtbar ist, so dass der Lichtleiter auch direkt vor das Fahrzeug leuchtet. Die Homogenität des ausgestrahlten Lichts ist bei dieser Lösung jedoch unbefriedigend, da die vom Lichtleiter weiter entfernten Rippen mit geringerer Intensität und auf einem kleineren Teil ihrer Fläche beleuchtet werden als die dem Lichtleiter näherliegenden Rippen, und in der Ausführung mit einem sichtbaren Lichtleiter ist dieser Lichtleiter teilweise durch die Rippen bedeckt. Ein weiterer Nachteil dieser Lösung ist die geringere Modifizierbarkeit des Erscheinungsbildes des Kühlergrills, der direkt leuchtende Teil des Kühlergrills ist nur der Teil des verwendeten Lichtleiters mit einem konstanten Querschnitt, der durch die Lücken im Kühlergrill sichtbar ist.

Es wäre also geeignet eine Lösung vorzuschlagen, welche einen leuchtenden Fahrzeugkühlergrill bietet, in dem der ursprüngliche lichtundurchlässige Kühlergrill integriert und er gleichzeitig eine ausreichend homogene Lichtausstrahlung ermöglichen wird.

### Darstellung der Erfindung

Die Nachteile der aus dem Stand der Technik bekannten Lösungen werden partiell durch die Baugruppe eines leuchtenden Kühlergrills für den Einbau im Fahrzeugfrontbereich, umfassend einen die Menge von Luftdurchgangsöffnungen bestimmenden Kühlergrill aus lichtundurchlässigem Material, gelöst. Ferner umfasst die Baugruppe eine Lichtleiste, einen Lichtleistenträger, ein Lichtleiterteil aus zumindest teilweise lichtdurchlässigem Material und eine Rückabdeckung, die für die Anordnung zwischen dem Kühlergrill und dem Raum unter der Fahrzeugfrontklappe bestimmt ist. Der Kühlergrill ist mit der Rückabdeckung verbunden und die Lichtleiste wird durch den Lichtleistenträger an die Rückabdeckung befestigt und die Lichtleiste ist zwischen der Rückabdeckung und dem Kühlergrill angeordnet und über den größten Teil der Breite der Baugruppe verläuft. Das Lichtleiterteil verläuft entlang der Lichtleiste zwischen der Lichtleiste und dem Kühlergrill, wobei das Lichtleiterteil mit einem Teil seines Rauminhaltes in die Luftdurchgangsöffnungen im Kühlergrill eingreift.

Die Lichtleiste dient also als Lichtquelle und das Licht der Lichtleiste wird durch das Lichtleiterteil und durch die in die Luftdurchgangsöffnungen eingreifende Teile des Lichtleiterteils ausgestrahlt. Die Länge der Lichtleiste von mindestens einer Hälfte, d.h. dem Großteil, bevorzugt mindestens von zwei Dritteln der Breite des Kühlergrills sorgt für eine ausreichende Ausleuchtung der Baugruppe. Dadurch wird der Bereich vor dem Fahrzeug ausgeleuchtet, z.B. wird die Sichtbarkeit des Fahrzeugs für die entgegenkommende Fahrzeuge erhöht oder die Fahrbahn beleuchtet, und auch die Wände der Luftdurchgangsöffnungen werden beleuchtet, die dann indirekt vor das Fahrzeug leuchten. Dadurch ist die erfindungsgemäße Baugruppe designmäßig wertvoller als die bekannten leuchtenden Kühlergrills. Gleichzeitig ist es im Vergleich zu Kühlergrills aus lichtdurchlässigem Material widerstandsfähiger gegen Verschmutzung oder Beschädigung und sorgt für eine hellere und homogenere Beleuchtung als Kühlergrills mit LED-Lichtquellen, die beispielsweise zwischen den Rippen angeordnet sind. Das Material des Lichtleiterteils leitet zumindest einen Teil des von der Lichtleiste auf ihn einfallenden Lichts und lenkt dieses Licht nach vorne. Vorzugsweise ist dieses Material klar, beispielsweise Plexiglas.

Ein Lichtleiterteil umfasst einen Körper und eine Menge von Vorsprüngen, die mit dem Körper verbunden sind, wobei der Körper eine Lichteintrittsfläche aufweist, die entlang der Lichtleiste verläuft, und jeder Vorsprung eine Lichtaustrittsfläche aufweist, wobei jeder Vorsprung in mindestens eine der Luftdurchgangsöffnungen im Kühlergrill eingreift. Diese Vorsprünge stellen also die genannten Teile des Rauminhaltes des Lichtleiterteils dar, die in die Luftdurchgangsöffnungen eingreifen. Die Form des Vorsprungs beeinflusst dann die Form des ausstrahlenden Lichts, beispielsweise kann der Vorsprung abgerundet sein oder umgekehrt scharfe Kanten aufweisen. Ferner kann der Lichtleitertteil homogenisierende Elemente wie Ritzen, Vorsprünge, Vertiefungen, abgewinkelte Flächen, im Material verteilten reflektierende Partikel, usw. umfassen. Der Lichtleiterteil kann auch farbig sein, beispielsweise orange, wenn die erfindungsgemäße Baugruppe als Blinker dienen soll, oder blau bzw. orange, wenn es als Warnleuchte dienen soll.

Erfindungsgemäß umfasst jeder Vorsprung zwei gegenüberliegende Seitenwände und eine Frontwand, wobei die Seitenwände den Wänden der jeweiligen Luftdurchgangsöffnung zugewandt sind, und die Frontwand für die Ausstrahlung des Lichts vor das Fahrzeug ausgelegt ist. Die Seitenwände beleuchten somit die Wände der Luftdurchgangsöffnungen, also die Wände der Rippen, die diese Öffnungen bilden, so dass diese Wände deutlicher als die anderen Teile des Kühlergrills sichtbar sind. Die Seitenwände können gegebenenfalls auf die Wände der Luftdurchgangsöffnungen aufsetzen, und die Wände der Luftdurchgangsöffnungen werden dann von der Frontwand, eventuell von den oberen und unteren Wänden des Vorsprungs beleuchtet, was aber nicht ein Teil der Erfindung ist. Die Frontwand ist dann bei der Frontansicht des Fahrzeuges direkt sichtbar und ihre Form beeinflusst das Erscheinungsbild des ausgestrahlten Lichts.

Die Höhe jedes Vorsprungs kann sich nach vorne hin verengen, wobei die Frontwand die schmalste Stelle des Vorsprungs abdeckt und so den hellsten leuchtenden Teil des Vorsprungs bildet. Alternativ oder zusätzlich kann sich auch die Breite der Vorsprünge, also in der horizontalen Abmessung, verengen, so dass bei der Frontansicht auch die Seitenwände sichtbar sind.

Die Baugruppe des leuchtenden Kühlergrills umfasst ferner bevorzugt auch einen Rahmen, wobei der Rahmen entlang der Lichtleiste verläuft, am Kühlergrill und/oder der Rückabdeckung befestigt ist und Lücken für den Durchgang des Lichtleiterteils aufweist, die zumindest mit einigen der Luftdurchgangsöffnungen im Kühlergrill gleichgerichtet sind, wobei der Lichtleiterteil am Rahmen befestigt ist und durch die Lücken für den Durchgang des Lichtleiterteils führt. Dieser Rahmen kann also aus einem lichtundurchlässigen Material erzeugt werden, so dass das Licht nur durch Teile des durch den Rahmen durchgehenden Lichtleiterteils geleitet wird. Dadurch wird der Einbau erleichtert, da der Rahmen die Position des Lichtleiterteils gegenüber dem Kühlergrill ausrichtet. Darüber hinaus kann der Lichtleiterteil teilweise vom Rahmen überdeckt sein, so dass von außen nur der gewünschte Teil des Lichtleiterteils sichtbar ist, der durch die Form und Größe der Lücken für den Durchgang des Lichtleiterteils bestimmt ist.

Bevorzugt umfasst die Lichtleiste einen Lichtleiter mit zwei freien Enden, wobei jedes freie Ende des Lichtleiters eine Lichtquelle aufweist. Vorzugsweise handelt es sich dabei um LED-Lichtquellen, wobei die Lichtquelle dann auch weitere LEDs umfassen kann. Die Verwendung eines Lichtleiters erhöht die Homogenität des ausgestrahlten Lichts und im Vergleich zu einer aus mehreren Punktlichtquellen bestehenden Lichtleiste auch die Herstellung günstiger macht und den Einbau erleichtert.

### Erläuterung der Zeichnungen

Die Darstellung der Erfindung wird weiter anhand von Ausführungsbeispielen erläutert, die unter Nutzung von Zeichnungen beschrieben sind, wobei zeigen die:
- Fig. 1: eine schematische Darstellung der perspektivischen Frontansicht der erfindungsgemäßen Baugruppe, wobei für eine übersichtliche Darstellung der hinter dem Kühlergrill angeordneten Teile die Hälfte des Kühlergrills unsichtbar ist,
- Fig. 2: eine schematische Darstellung der Frontansicht der Baugruppe aus Fig. 1,
- Fig. 3: eine Darstellung der perspektivischen Ansicht des Schnitts A-A aus Fig. 2 durch eine vertikale Ebene, die von einem der Vorsprünge des Lichtleiterteils geführt wird,
- Fig. 4: eine Darstellung der perspektivischen Ansicht des Schnitts B-B aus Fig. 2 durch eine vertikale Ebene, die durch eine der Kühlergrillrippen geführt wird, d.h. zwischen den Luftdurchgangsöffnungen und zwischen den Vorsprüngen des Lichtleiterteils,
- Fig. 5: eine schematische Darstellung einer Detailansicht des Schnitts A-A aus Fig. 3 in einer senkrecht zur Ebene dieses Schnitts gerichteten Ansicht,
- Fig. 6: eine schematische Darstellung einer Detailansicht des Schnitts B-B aus Fig. 4 in einer senkrecht zur Ebene dieses Schnittes gerichteten Ansicht und die
- Fig. 7: eine Darstellung der Ansicht des im Rahmen befestigten Lichtleiterteils, wobei die Vorsprünge des Lichtleiterteils durch die Lücken für den Durchgang des Lichtleiterteils im Rahmen durchdringen.

### Ausführungsbeispiele der Erfindung

Die Erfindung, deren Gegenstand die Baugruppe eines leuchtenden Kühlergrills ist, insbesondere für einen Personenkraftfahrzeug, soll im Folgenden anhand der in den Figuren dargestellten Ausführungsbeispiele erläutert.

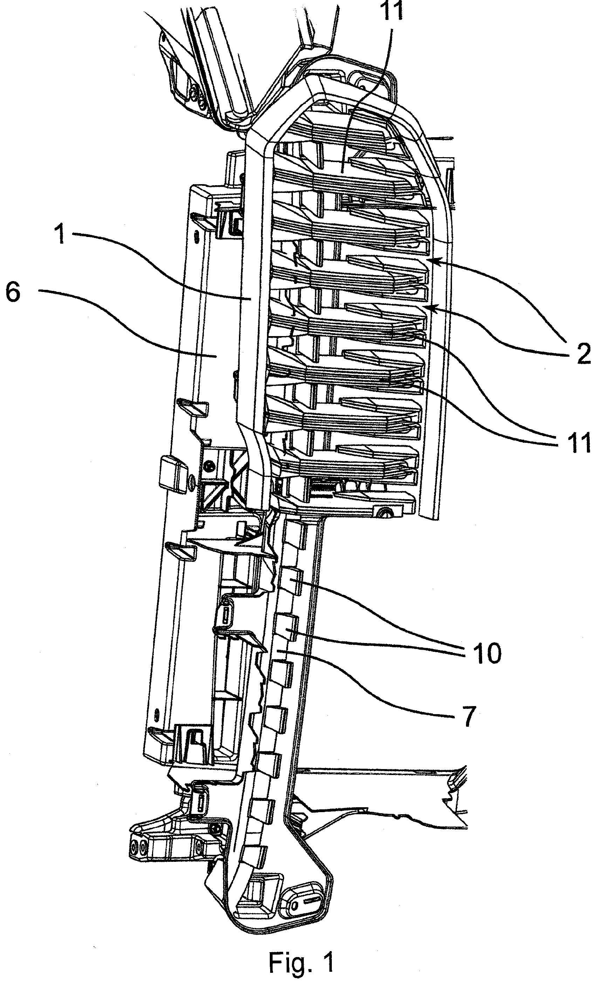

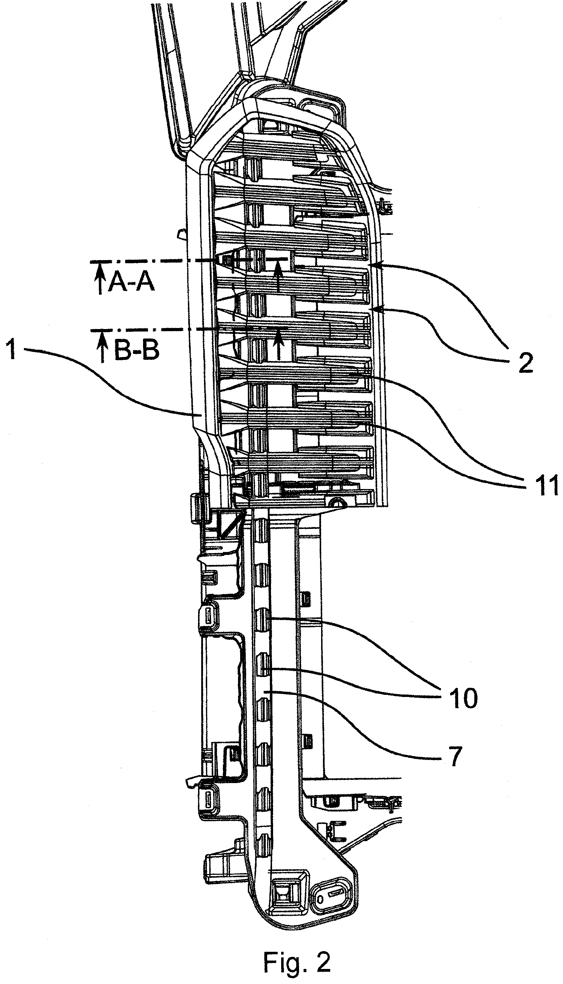

Die Baugruppe des leuchtenden Kühlergrills nach vorliegender Erfindung zeigen die Fig. 1 und 2 und sie umfasst einen Kühlergrill 1, eine Lichtleiste 3, einen Lichtleistenträger 4, ein Lichtleiterteil 5 und eine Rückabdeckung 6. Die Lichtleiste 3 ist an der Rückabdeckung 6 angebracht, wobei sie nach vorne zum Kühlergrill 1 gerichtet ist. Das Lichtleiterteil 5 ist vor der Lichtleiste 3 angeordnet, so dass das Licht von der Lichtleiste 3 durch dieses durchgeht und dieses Licht in den Raum vor der Baugruppe und auf einige Flächen des Kühlergrills 1 ausgestrahlt wird. Der Kühlergrill 1 stellt den vorderen Abschnitt der Baugruppe dar, also den in den Raum vor dem Fahrzeug gerichteten Abschnitt, und umfasst den Umfangsteil und darin eine Reihe von Rippen 11, die in dargestellter Ausführung vertikal sind. Zwischen den Rippen 11 sind Luftdurchgangsöffnungen 2 ausgebildet, durch welche die Luft durch den Kühlergrill 1 in das Innere der Baugruppe und von der Baugruppe in Richtung zum Kühler, Klimaanlage usw. strömen kann. Als Luftdurchgangsöffnungen 2 sind hier also die Zwischenräume zwischen den Rippen 11. Der Kühlergrill 1 besteht aus lichtundurchlässigem Material, insbesondere aus Kunststoff, und kann die Form der aus dem Stand der Technik bekannten gewöhnlichen Kühlergrills aufweisen. Die Fig. 1 sowie Fig. 2 wird nur die Hälfte des Kühlergrills 1 angezeigt, so dass auch die dahinter angeordneten Komponenten sichtbar sind. Die nicht angezeigte Hälfte ist symmetrisch zur dargestellten ausgeführt, wie es bei Kühlergrills üblich ist.

Die Rückabdeckung 6 besteht auch aus lichtundurchlässigem Kunststoff und bildet die Rückseite der Baugruppe, die nach dem Einbau in die Montageöffnung des Fahrzeuges im Frontbereich zum Fahrgastraum, dem Motor usw. gerichtet ist. Der Kühlergrill 1 und die Rückabdeckung 6 sind am Umfang miteinander beispielsweise verschraubt, verklebt, mit formschlüssiger Verbindung, mittels flexible Kunststoffclips an einem Teil, die in die komplementären Öffnungen des anderen Teils einrasten, usw. verbunden. Nachdem der Kühlergrill 1 und die Rückabdeckung 6 zusammen verbunden sind, grenzen sie den Innenraum der Baugruppe des leuchtenden Kühlergrills ab, in dem die weiteren genannten Komponenten angeordnet sind. Die Luft kann aus der Baugruppe durch die Öffnungen in der Rückabdeckung 6 z.B. zum z.B. zum Kühler abgeführt werden.

Die Lichtleiste 3 verläuft über den größten Teil der Breite der Baugruppe und ist horizontal ausgerichtet. Die Lichtleiste 3 in der dargestellten Ausführung umfasst einen länglichen Lichtleiter mit einem etwa konstanten Querschnitt, hier kreisförmig, er kann aber auch andersförmig sein, z.B. pilzförmig, was bei den Lichtleitern eine gewöhnliche Form darstellt. Die Pilzform ergibt sich aus der geschlossenen Kurve, die symmetrisch um eine in der gleichen Ebene wie die gesamte Kurve liegende Achse ist, wobei diese Kurve vier Abschnitten aufweist, im ersten Abschnitt ist sie nach innen gekrümmt, z. B. geht es um ein Kreissektor, der zweite und dritte Abschnitt sind in andere Richtung gekrümmt, d.h. nach außen, wobei der erste Abschnitt zwischen ihnen liegt, und im vierten Abschnitt ist die Kurve gerade, wobei sich der vierte Abschnitt gegenüber dem ersten befindet und die Symmetrieachse durch die Mitte des ersten und vierten Abschnitts verläuft. Der vierte Abschnitt weist oft Ablenkelemente auf. Der Lichtleiter kann Ablenkelemente an seiner Rückseite aufweisen und in der dargestellten Ausführung umfasst er ferner auch zwei Lichteintrittsflächen an seinen Enden. Die Lichtleiste 3 umfasst weiter zwei Punktlichtquellen, insbesondere LED-Lichtquellen, die jeweils zu einer der Lichteintrittsflächen an den Enden des Lichtleiters gerichtet sind. Alternativ kann die Lichtleiste 3 beispielsweise als eine Reihe von Punktlichtquellen realisiert werden, in solchem Fall kann sie zusätzlich eine entlang dieser Reihe verlaufende homogenisierende Linse aufweisen.

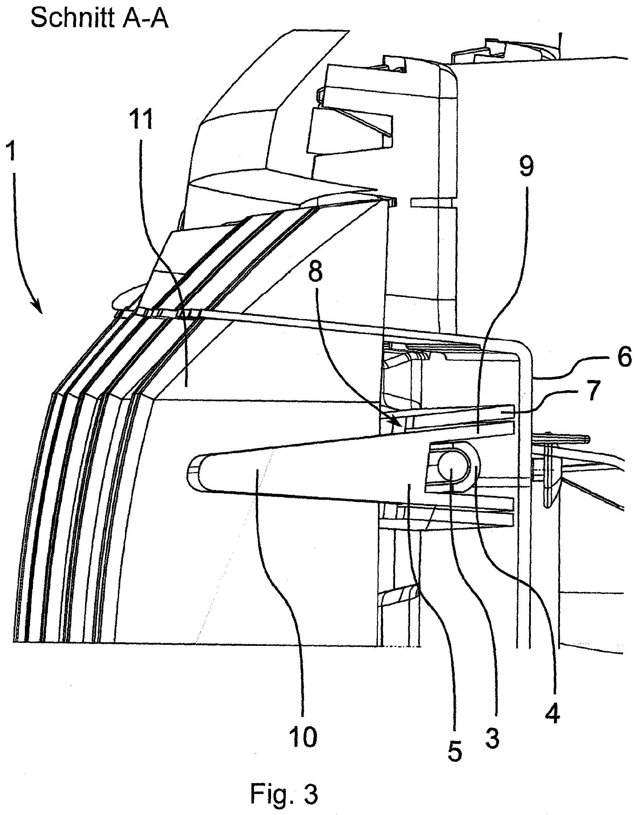

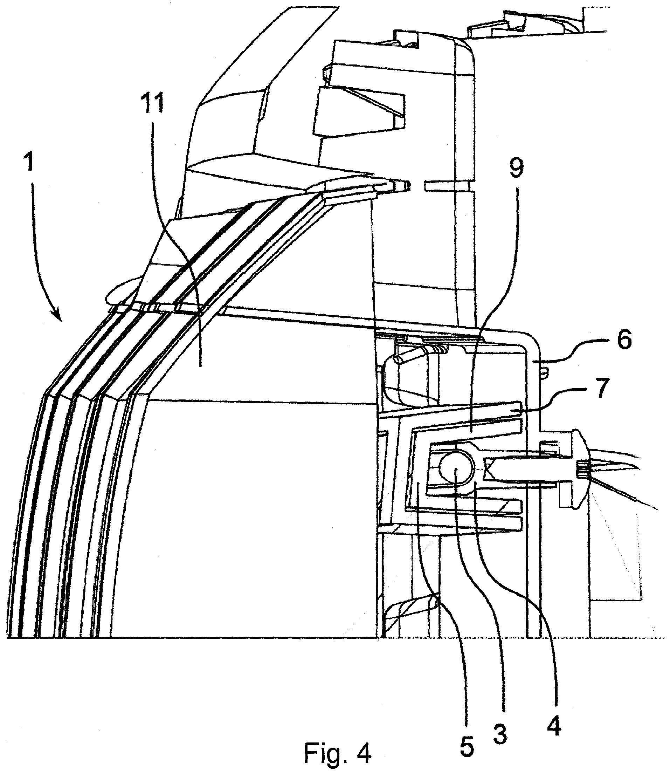

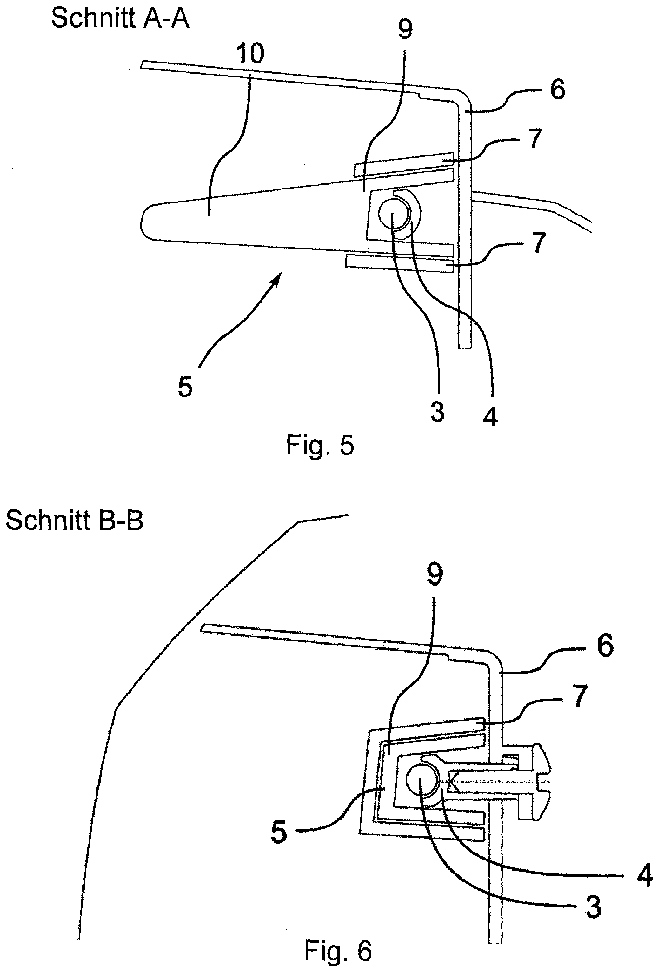

Der Lichtleistenträger 4 dient zur Befestigung der Lichtleiste 3 an der Rückabdeckung 6. Der Lichtleistenträger 4 verläuft entlang der gesamten Lichtleiste 3 und umfasst einen vorderen Teil mit einer länglichen Öffnung komplementär zu der Form des Lichtleiters und einen hinteren Teil zur Befestigung an die Rückabdeckung 6. Der Lichtleiter kann im vorderen Teil in der Öffnung beispielsweise durch eine formschlüssige Verbindung mit Vorspannung befestigt werden, er kann geklebt werden usw. Der hintere Teil umfasst in dargestellter Ausführung mehrere, beispielsweise vier bis zehn, Halterungen, die durch die Rückabdeckung 6 durchgehen. Jede dieser Halterungen umfasst eine Öffnung mit einem Innengewinde, in das eine Schraube von hinten angeschraubt ist, die sich mit ihrem Kopf an die Rückseite der Rückabdeckung 6 abstützt und so den Lichtleistenträger 4 in der Position fixiert. Diese Halterung ist in den Schnitten in Fig. 4 und 6 dargestellt. Alternativ kann der Lichtleistenträger 4 am Körper 9 (Lichtleiterteil 5) durch Verklebung, durch formschlüssige Verbindung usw. befestigt werden, oder es kann sich um einen festen Bestandteil der Rückabdeckung 6 handeln. Die Vorderseite des Lichtleistenträgers 4, zum Beispiel die Oberfläche der Lücken für den Lichtleiter, kann in einigen Ausführungen mit reflektierendem Material beschichtet werden. Darüber hinaus kann die Vorderseite der Rückabdeckung 6 teilweise mit reflektierendem Material beschichtet werden. Die Form der Lichtleiste 3, des Lichtleistenträgers 4 und deren Anordnung untereinander sowie gegenüber den anderen Komponenten der Baugruppe sind am besten der Fig. 3 bis 6 zu entnehmen.

Der Lichtleiterteil 5 besteht aus einem lichtdurchlässigen Material, beispielsweise gleich wie der Lichtleiter der Lichtleiste 3. Dieses Material kann beispielsweise Glas oder Plexiglas sein, insbesondere PMMA oder Polycarbonat; zum Beispiel kann jedes zumindest teilweise lichtdurchlässige Polymermaterial verwendet werden. Der Lichtleiterteil 5 dient als Lichtleiter, Linse und/oder Homogenisierungselement für das Licht aus der Lichtleiste 3. Der Lichtleiterteil 5 umfasst einen Körper 9 und eine Menge der aus dem Körper 9 hervorgehenden Vorsprünge 10. Der Körper 9 verläuft über die gesamte Länge der Lichtleiste 3 und umschließt diese teilweise, in der dargestellten Ausführung weist der Körper 9 einen trapezförmigen Querschnitt mit einer von einer Seiter in der Mitte geöffneten Trapezöffnung, und durch diese Öffnung geht die Lichtleiste 3 hindurch. Die Vorsprünge 10 sind so angeordnet, dass sich jeder hinter jeweils einer Luftdurchgangsöffnung 2 befindet und in diese Luftdurchgangsöffnung 2 eingreift, wie in Fig. 3 und in der vereinfachten Ansicht in Fig. 5 dargestellt ist. Die Vorsprünge 10 dienen also dem Lichtaustritt aus dem Lichtleiterteil 5.

In der dargestellten Ausführung hat jeder Vorsprung 10 eine annähernd dreieckige Form, die sich nach vorne verengt, alternativ kann sie eine Form mit einer parallelen oberen und unteren Fläche aufweisen und am vorderen Ende kann der Vorsprung 10 abgerundet sein oder auch nicht. Der Vorsprung 10 umfasst zwei gegenüberliegende Seitenwände, die den Wänden der entsprechenden Luftdurchgangsöffnung 2 zugewandt sind und auf diese aufsetzen. Die Wände der Rippen 11 werden dann von den anderen Wänden des Vorsprungs 10 beleuchtet, was aber nicht ein Teil der Erfindung ist. Alternativ kann es einen Luftspalt zwischen den Seitenwänden und den Wänden der Rippen 11 geben. Der Vorsprung 10 umfasst ferner eine Vorderwand, in dargestellter Ausführung bildet diese Vorderwand auch die Ober- und Unterseite des Vorsprungs 10. Die Vorderwand dient als die vor das Fahrzeug gerichtete Lichtaustrittsfläche; da sie direkt gegenüber der Lichtleiste 3 angeordnet ist, strahlt sie mehr Licht aus als die Seitenwände. Infolgedessen ist von der Frontseite des Kühlergrills 1 die Vorderwand jedes Vorsprungs 10 sowie die Wände der Luftdurchgangsöffnungen 2 besser sichtbar als bei gewöhnlichen Kühlergrills. Insbesondere werden die Seitenwände der Rippen 11, die diese Öffnungen bilden, und die oberen und unteren Wände dieser Öffnungen beleuchtet. Die Höhe der Vorsprünge 10 in der dargestellten Ausführung beträgt etwa ein Zwanzigstel bis ein Zehntel der Höhe der Rippen 11. Der gesamte Lichtleiterteil 5 kann einstückig sein. Alternativ kann es sich aus mehreren Teilen zusammensetzen, beispielsweise können die Vorsprünge 10 einzeln am Körper 9 befestigt sein.

Wie den Figuren zu entnehmen ist, greifen die Vorsprünge 10 in der dargestellten Ausführung etwa in drei Viertel der Tiefe der Luftdurchgangsöffnungen 2 ein, wobei die Tiefe der Öffnungen stellt die in Richtung der Fahrzeuglängsachse gemessene Abmessung dar. In alternativen Ausführungen können sie jedoch beispielsweise nur in die Hälfte oder ein Zehntel usw. eingreifen, sie können die komplette Tiefe der Luftdurchgangsöffnungen 2 durchgehen und in einigen Ausführungen können sie sogar in Vorwärtsrichtung vor den Kühlergrill 1 herausragen. Auch die Form der Vorsprünge 10 kann in anderen Ausführungen unterschiedlich sein, beispielsweise können sie aus abgewinkelten Flächen gebildet sein, sie können beispielsweise die Form eines Quaders, eines Zylinderteils (mit einer horizontalen oder vertikalen Achse), eines Polyeders, eines Ellipsoids usw. aufweisen. Bei dem Zylinder oder Ellipsoid muss der Übergang zwischen den Seitenwänden und der Vorderwand nicht erkennbar sein, bzw. können diese Wände durch eine gemeinsame Fläche gebildet werden. Die Höhe der Vorsprünge 10 kann in alternativen Ausführungen ebenfalls unterschiedlich sein, zum Beispiel können sie bis zur Hälfte der Höhe der Luftdurchgangsöffnungen 2 ausfüllen.

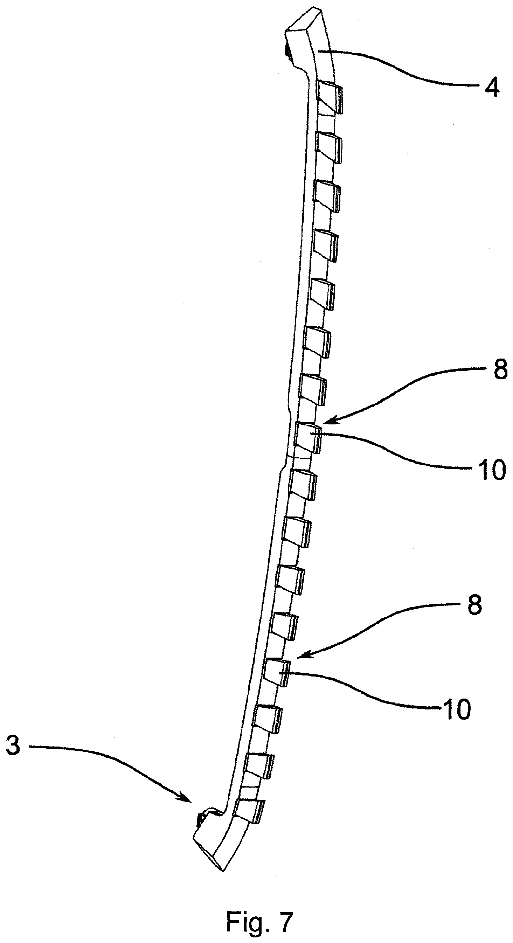

Die Befestigung des Lichtleiterteils 5 erfolgt in der dargestellten Ausführung mittels eines Rahmens 7 aus lichtundurchlässigem Polymer, beispielsweise gleich wie der Kühlergrill 1 und die Rückabdeckung 6. Der Rahmen 7 weist einen trapezförmigen Querschnitt und umschließt die Lichtleiste 3 und den Körper 9 des Lichtleiterteils 5 entlang deren gesamten Länge, wobei die Vorsprünge 10 durch die Lücken 8 für den Durchgang des Lichtleiterteils vor den Rahmen 7 durchgehen. Der Rahmen 7 kann zum Kühlergrill 1 und/oder zur Rückabdeckung 6. befestigt werden, einen selbständigen Rahmen 7 mit der Lichtleiste 3 und dem Lichtleiterteil 5 zeigt die Fig. 7. Der Rahmen 7 kann z.B. durch Verschrauben, Verkleben, durch die in komplementäre Öffnungen einrastende Vorsprünge usw. befestigt werden. Der Lichtleiterteil 5 hält im Rahmen 7 beispielsweise dank seiner Form, wie der Fig. 5 zu entnehmen ist, er kann aber auch verklebt, verschraubt usw. werden. Dank des Rahmens 7 ist der Körper 9 von außen des Fahrzeuges überhaupt nicht sichtbar. Die Lücken 8 für den Durchgang des Lichtleiterteils sind mit den Luftdurchgangsöffnungen 2 ausgerichtet. Vorzugsweise sind die Lücken voneinander gleichmäßig beabstandet. In einer vorteilhaften Ausführung ist die Anzahl der Vorsprünge 10 gleich der Anzahl der Luftdurchgangsöffnungen 2, so dass jede dieser Öffnungen beleuchtet ist. Alternativ kann aber auch beispielsweise nur jede zweite, nur die Öffnungen in der Mitte des Kühlergrills 1 oder umgekehrt nur an seinen Rändern usw. beleuchtet werden.

In alternativen Ausführungen kann die Baugruppe ohne Rahmen 7 realisiert werden, so dass der Lichtleiterteil 5 beispielsweise nur durch den Kühlergrill 1, die Rückabdeckung 6, den Lichtleiterträger 4 usw. oder deren Kombination in der Position gehalten werden kann. In anderen Ausführungen kann es eine andere Form der Rippen 11 und damit auch der Luftdurchgangsöffnungen 2 und/oder deren Anzahl geben. Die Rippen 11 können zum Beispiel geneigt, horizontal sein oder durch ein Gitter usw. ersetzt werden. Der Körper 9 kann alternativ beispielsweise die Form eines Halbkreises, eines Quadrats, eines Teils der Ellipse usw. aufweisen. Die Form des Rahmens 7, wenn dieser Teil der Baugruppe ist, kopiert bevorzugt die Form des Körpers 9. In einigen Ausführungen kann der Lichtleiterteil 5 homogenisierende Elemente oder andere Elemente aufweisen, welche die Form des durchgehenden Lichts beeinflussen. Beispielsweise kann es sich um ein Aufrauen der Oberfläche, die Ritze, Vorsprünge, Vertiefungen, abgewinkelte Flächen usw. handeln.

Die erfindungsgemäße Baugruppe kann in einigen Ausführungen für die Bereitstellung von zusätzlichen Beleuchtungsfunktionalitäten ausgelegt werden, wie z.B. Fahrtrichtungsanzeige, Aufblinken beim Entriegeln oder Verriegeln des Fahrzeugs, Einstellen der Beleuchtungsintensität usw. Zu diesen Zwecken kann die Baugruppe eine Steuereinheit umfassen oder an eine vorhandene Steuereinheit im Fahrzeug angeschlossen sein. Die oben genannten Alternativen und Modifikationen können miteinander kombiniert werden. Zum Beispiel ist es möglich, verschiedene Formen und Anzahlen von Rippen 11, Luftdurchgangsöffnungen 2 und/oder Lücken 8 für den Durchgang eines Lichtleiterteils mit verschiedenen Materialien dieser oder anderer Komponenten, mit unterschiedlichen Formen und Anzahlen der Vorsprünge 10, verschiedene Formen des Körpers 9, verschiedene Beleuchtungsfunktionalitäten, verschiedene Homogenisierungselemente usw. zu kombinieren.

### Bezugszeichenliste

- 1 -: Kühlergrill
- 2 -: Luftdurchgangsöffnung
- 3 -: Lichtleiste
- 4 -: Lichtleistenträger
- 5 -: Lichtleiterteil
- 6 -: Rückabdeckung
- 7 -: Rahmen
- 8 -: Lücke für den Durchgang des Lichtleiterteils
- 9 -: Körper
- 10 -: Vorsprung
- 11 -: Rippe

## Patentansprüche

1. Baugruppe eines leuchtenden Kühlergrills zum Einbau im Fahrzeugfrontbereich bestehend aus einem Kühlergrill (1) aus lichtundurchlässigem Material mit lichtundurchlässigen Rippen, der eine Reihe von Luftdurchgangsöffnungen (2) bestimmt, wobei die Baugruppe ferner eine Lichtleiste (3), einen Lichtleistenträger (4), einen aus zumindest teilweise lichtdurchlässigem Material erzeugten Lichtleiterteil (5) und eine Rückabdeckung (6) umfasst, die zwischen dem Kühlergrill (1) und dem Raum unter der Fahrzeugfrontklappe angeordnet werden soll, wobei der Kühlergrill (1) mit der Rückabdeckung (6) verbunden ist, die Lichtleiste (3) mittels eines Lichtleistenträgers (4) an der Rückabdeckung (6) befestigt ist, wobei die Lichtleiste (3) zwischen der Rückabdeckung (6) und dem Kühlergrill (1) angeordnet ist und über den größten Teil der Breite der Baugruppe durchläuft und der Lichtleiterteil (5) entlang der Lichtleiste (3) zwischen der Lichtleiste (3) und dem Kühlergrill (1) verläuft, wobei der Lichtleiterteil (5) mit einem Teil seines Rauminhaltes in die Luftdurchgangsöffnungen (2) in den Kühlergrill (1) eingreift, wobei der Lichtleiterteil (5) einen Körper (9) und eine Menge von Vorsprüngen (10) umfasst, die mit dem Körper (9) verbunden sind, wobei der Körper (9) eine Lichteintrittsfläche aufweist, die entlang der Lichtleiste (3) verläuft, und jeder Vorsprung (10) eine Lichtaustrittsfläche aufweist, wobei jeder Vorsprung (10) in mindestens eine der Luftdurchgangsöffnungen (2) in den Kühlergrill (1) eingreift, wobei jeder Vorsprung (10) zwei gegenüberliegende Seitenwände und eine Vorderwand umfasst, wobei die Seitenwände den Wänden der jeweiligen Luftdurchgangsöffnung (2) zugewandt und dazu ausgelegt sind, die Wände der Luftdurchgangsöffnungen (2), nämlich die Wände der Rippen, die diese Luftdurchgangsöffnungen (2) bilden, zu beleuchten, so dass die Wände indirekt vor das Fahrzeug leuchten, und wobei die Vorderwand für die Ausstrahlung des Lichts vor das Fahrzeug ausgelegt ist.

2. Baugruppe des leuchtenden Kühlergrills nach Anspruch 1 **dadurch gekennzeichnet, dass** sie ferner einen Rahmen (7) umfasst, wobei der Rahmen (7) entlang der Lichtleiste (3) verläuft, an dem Kühlergrill (1) und/oder der Rückabdeckung (2) befestigt ist und Lücken (8) für den Durchgang des Lichtleiterteils aufweist, die mit mindestens einigen der Luftdurchgangsöffnungen (2) im Kühlergrill (1) ausgerichtet sind, wobei der Lichtleiterteil (5) am Rahmen (7) befestigt ist und durch die Lücken (8) für den Durchgang des Lichtleiterteils führt.

3. Baugruppe des leuchtenden Kühlergrills nach einem der Ansprüche 1 bis 2 **dadurch gekennzeichnet, dass** die Lichtleiste (3) einen Lichtleiter mit zwei freien Enden umfasst, wobei jedes freie Ende des Lichtleiters eine Lichtquelle aufweist.

## Claims

1. Assembly of an illuminated radiator grill for installation in the front region of a vehicle, consisting of a radiator grill (1) which is made of opaque material with opaque ribs and which determines a series of air passage openings (2), wherein the assembly further comprises a lighting strip (3), a lighting strip support (4), a light guide part (5) made of at least partially translucent material, and a rear cover (6) which is to be arranged between the radiator grill (1) and the area under the vehicle hood, wherein the radiator grill (1) is connected to the rear cover (6), the lighting strip (3) is attached to the rear cover (6) by means of a lighting strip support (4), wherein the lighting strip (3) is arranged between the rear cover (6) and the radiator grill (1) and runs over the majority of the width of the assembly, and the light guide part (5) runs along the lighting strip (3) between the lighting strip (3) and the radiator grill (1), wherein a part of the volume of the light guide part (5) engages into the air passage openings (2) in the radiator grill (1), wherein the light guide part (5) comprises a body (9) and a number of projections (10) connected to the body (9), wherein the body (9) has a light entry surface running along the lighting strip (3), and each projection (10) has a light exit surface, wherein each projection (10) engages into at least one of the air passage openings (2) in the radiator grill (1),
wherein each projection (10) comprises two opposite side walls and a front wall, wherein the side walls face the walls of the respective air passage opening (2) and are designed to illuminate the walls of the air passage openings (2), namely the walls of the ribs forming these air passage openings (2), so that the walls indirectly illuminate in front of the vehicle, and wherein the front wall is designed for the emission of the light in front of the vehicle.

2. Assembly of the illuminated radiator grill according to claim 1, **characterized in that** it further comprises a frame (7), wherein the frame (7) runs along the lighting strip (3), is attached to the radiator grill (1) and/or the rear cover (2), and has gaps (8) for the passage of the light guide part, which are aligned with at least some of the air passage openings (2) in the radiator grill (1), wherein the light guide part (5) is attached to the frame (7) and passes through the gaps (8) for the passage of the light guide part.

3. Assembly of the illuminated radiator grill according to any one of claims 1 to 2, **characterized in that** the lighting strip (3) comprises a light guide with two free ends, wherein each free end of the light guide has a light source.

## Revendications

1. Ensemble de calandre éclairée destinée à être montée dans la zone avant du véhicule constituée d'une calandre (1) en matériau opaque avec des nervures opaques qui détermine une série d'ouvertures de passage d'air (2), dans lequel l'ensemble comprend en outre une barrette lumineuse (3), un support de barrette lumineuse (4), une partie de guide de lumière (5) réalisée en un matériau au moins partiellement transparent et un capot arrière (6) qui doit être disposé entre la calandre (1) et l'espace sous le volet avant du véhicule, dans lequel la calandre (1) est reliée au capot arrière (6), la barrette lumineuse (3) est fixée au capot arrière (6) au moyen d'un support de barrette lumineuse (4), dans lequel la barrette lumineuse (3) est disposée entre le capot arrière (6) et la calandre (1) et traverse la plus grande partie de la largeur de l'ensemble, et la partie de guide de lumière (5) s'étend le long de la barrette lumineuse (3) entre la barrette lumineuse (3) et la calandre (1), dans lequel la partie de guide de lumière (5) s'engage avec une partie de son volume dans les ouvertures de passage d'air (2) dans la calandre (1), dans lequel la partie de guide de lumière (5) comprend un corps (9) et une quantité de saillies (10) qui sont reliées au corps (9), dans lequel le corps (9) présente une surface d'entrée de lumière qui s'étend le long de la barrette lumineuse (3) et chaque saillie (10) présente une surface de sortie de lumière, dans lequel chaque saillie (10) s'engage dans au moins l'une des ouvertures de passage d'air (2) dans la calandre (1), dans lequel chaque
saillie (10) comprend deux parois latérales opposées et une paroi avant, dans lequel les parois latérales sont tournées vers les parois de l'ouverture de passage d'air (2) respective et sont conçues pour éclairer les parois des ouvertures de passage d'air (2), à savoir les parois des nervures qui forment ces ouvertures de passage d'air (2), de sorte que les parois éclairent indirectement devant le véhicule, et dans lequel la paroi avant est conçue pour émettre de la lumière devant le véhicule.

2. Ensemble de la calandre éclairée selon la revendication 1, **caractérisé en ce qu'**il comprend en outre un cadre (7), dans lequel le cadre (7) s'étend le long de la barrette lumineuse (3), est fixé à la calandre (1) et/ou au capot arrière (2) et présente des espaces (8) pour le passage de la partie de guide de lumière, espaces qui sont orientés avec au moins certaines des ouvertures de passage d'air (2) dans la calandre (1), dans lequel la partie de guide de lumière (5) est fixée au cadre (7) et passe à travers les espaces (8) pour le passage de la partie de guide de lumière.

3. Ensemble de la calandre éclairée selon l'une quelconque des revendications 1 à 2, **caractérisé en ce que** la barrette lumineuse (3) comprend un guide de lumière avec deux extrémités libres, dans lequel chaque extrémité libre du guide de lumière présente une source de lumière.
